# EUROPÄISCHE PATENTSCHRIFT

(11) **EP 4 226 224 B1**
(45) Veröffentlichungstag und Bekanntmachung des Hinweises auf die Patenterteilung: **02.07.2025**
(21) Anmeldenummer: 21791258.3
(22) Anmeldetag: 05.10.2021
(51) Int. Cl.: G05B 19/4099, B33Y 80/00

(54) **VERFAHREN ZUM HERSTELLEN EINES TEILWEISE ADDITIV GEFERTIGTEN BAUTEILS FÜR EINE TECHNISCHE VORRICHTUNG**
METHOD OF MANUFACTURING A COMPONENT FOR A TECHNICAL DEVICE
PROCÉDÉ DE FABRICATION D'UN COMPOSANT POUR UN DISPOSITIF TECHNIQUE

(30) Priorität: 06.10.2020 EP 20020462
(43) Veröffentlichungstag der Anmeldung: 16.08.2023
(73) Patentinhaber: Linde GmbH, 82049 Pullach (DE)
(72) Erfinder: AIGNER, Herbert, 82049 Pullach (DE); KANZLER, Karlmann, 82049 Pullach (DE); WIMMER, Georg, 82049 Pullach (DE); HERWERTH, Christian, Michael, 82049 Pullach (DE)
(74) Vertreter: Meilinger, Claudia Sabine
(86) Internationale Anmeldenummer: PCT/EP2021/025386
(87) Internationale Veröffentlichungsnummer: WO 2022/073640

(56) Entgegenhaltungen:
- EP-A1- 2 962 836
- EP-A1- 3 388 171
- WO-A1-2017/044892
- DE-A1- 102013 207 656
- DE-A1- 102018 213 351
- DE-A1- 102018 213 416

## Beschreibung

Die Erfindung betrifft ein Verfahren zum Herstellen eines teilweise additiv gefertigten

Bauteils für eine technische Vorrichtung nach Anspruch 1. Bevorzugte Ausführungsformen der Erfindung sind in den abhängigen Ansprüchen definiert.

### Stand der Technik

Technische Vorrichtungen, wie Maschinen, Apparate oder Anlagen, bzw. deren einzelne Bauteile sind im laufenden Betrieb oftmals hohen Belastungen ausgesetzt. So können beispielsweise in fluiddurchströmten Bauteilen einer verfahrenstechnischen Vorrichtung aufgrund der durch das Bauteil geleiteten Fluide hohe Belastungen auftreten. Beispielsweise werden durch Header eines Wärmetauschers, z.B. eines gelöteten Rippen-Platten-Wärmetauschers, Prozessmedien zum Durchführen eines Wärmetauschs zu- und abgeführt. Derartige Bauteile bzw. deren Wandungen müssen daher oftmals hohen Drücken, Spannungen und weiteren Belastungen standhalten. Beispielsweise können auch die Wandungen von Druckbehältern derartigen hohen Belastungen ausgesetzt sein, beispielsweise in Behältern zum Speichern von Stoffen unter positivem oder negativem Außen- oder Innendruck.

Zur Dimensionierung derartiger Bauteile kann beispielsweise von einer Position der höchsten Belastung des Bauteils ausgegangen werden. Die Wandstärke des Bauteils an dieser Position wird derart gewählt, dass die Wand den dortigen hohen Belastungen standhalten kann. Oftmals definiert diese Position mit den höchsten Belastungen die Wandstärke des gesamten Bauteils.

Die DE 10 2018 213 416 A1 betrifft beispielsweise die Herstellung eines Bauelements mittels eines generativen bzw. additiven Fertigungsverfahrens. Im Speziellen beschreibt die DE 10 2018 213 416 A1 ein Verfahren zur Planung von Werkzeugpfaden, entlang welcher ein Werkzeug bei dem generativen Fertigungsverfahren relativ zu dem Bauelement zu bewegen ist, um Verstärkungsfasern zum Verstärken des mittels des generativen Fertigungsverfahrens herzustellenden Bauelements entlang von Faserbahnen abzulegen. Zu diesem Zweck werden ein virtuelles Modell des herzustellenden Bauelements charakterisierende Bauteildaten empfangen. Eine Eingabe wird empfangen, welche wenigstens eine das virtuelle Modell an wenigstens einer Stelle angreifende Last und die Stelle charakterisiert. Eine Topologieoptimierung wird anhand der Eingabe und anhand der Bauteildaten wird durchgeführt, wobei durch die Topologieoptimierung die Faserbahnen und die daraus resultierenden Werkzeugpfade derart ermittelt werden, dass eine aus der Last resultierende Belastung des virtuellen Modells ein vorbestimmtes Optimierungskriterium erfüllt.

Gemäß der DE 10 2018 213 416 A1 wird somit das gesamte Bauelement vollständig mittels des generativen bzw. additiven Fertigungsverfahren gefertigt, was jedoch mit hohem Zeit- und Kostenaufwand verbunden ist.

Es ist wünschenswert, die Herstellung von Bauteilen für technische Vorrichtungen zu verbessern.

### Offenbarung der Erfindung

Vor diesem Hintergrund schlägt die vorliegende Erfindung ein Verfahren zum Herstellen eines teilweise additiv gefertigten Bauteils für eine technische Vorrichtung vor. Ausgestaltungen sind jeweils Gegenstand der abhängigen Patentansprüche und der nachfolgenden Beschreibung.

Der Erfindung liegt die Erkenntnis zugrunde, eine einfache Grundstruktur eines Bauteils mit einer minimal erforderlichen Wandstärke mittels eines nicht-additiven Fertigungsverfahrens herzustellen und diese Grundstruktur an bestimmten Positionen, die erhöhten mechanischen Spannungen ausgesetzt sind, durch Aufbringen von Material mittels additiver Fertigung gezielt zu verstärken bzw. zu versteifen. Diese zu verstärkenden Bereiche bzw. Positionen der Grundstruktur werden durch ein Optimierungsverfahren bzw. einen Optimierungsalgorithmus bestimmt.

Im Rahmen des vorliegenden Verfahrens wird eine Grundstruktur des Bauteils mit einer vorgegebenen Wandstärke mittels eines nicht-additiven Fertigungsverfahrens gefertigt. Wenigstens ein Bereich des Bauteils, zweckmäßigerweise wenigstens ein zu verstärkender Bereich, wird mit Hilfe eines Optimierungsverfahrens bestimmt bzw. identifiziert bzw. lokalisiert. In diesem wenigstens einen Bereich wird eine Stützstruktur mittels eines additiven Fertigungsverfahrens auf die Grundstruktur aufgebracht.

Die Grundstruktur stellt zweckmäßigerweise ein Grundvolumen bzw. ein erstes Materialvolumen dar. Die Stützstruktur stellt insbesondere ein Zusatzvolumen bzw. ein zweites Materialvolumen dar. Das gesamte Bauteil bzw. ein Gesamtvolumen des Bauteils wird somit durch die Grundstruktur bzw. das Grundvolumen und die darauf aufgebrachte Stützstruktur bzw. das darauf aufgebrachte Zusatzvolumen gebildet.

Die Grundstruktur mit der vorgegebenen Wandstärke kann beispielsweise mittels eines nicht-additiven Fertigungsverfahrens wie herkömmlichem Urformen, z.B. Gießen, oder herkömmlichem Umformen, z.B. Biegen, gefertigt werden. Beispielsweise kann im Zuge dessen eine gesamte das Bauteil definierende Wandung einstückig hergestellt werden. Ebenso können beispielsweise auch einzelne Teilwände separat hergestellt werden, z.B. mittels derartiger nicht-additiver Fertigungsverfahren wie herkömmlichem Urformen oder herkömmlichem Umformen, und zu der Gesamtwandung des Bauteils vereint werden, z.B. mittels eines Fügeverfahrens, etwa eines Schweißverfahrens.

Als nicht-additives Fertigungsverfahren sei im vorliegenden Zusammenhang beispielsweise ein Fertigungsverfahren gemäß der Norm DIN 8580 zu verstehen, welches nicht zu der additiven Fertigung gezählt wird. Weitere Beispiele für nicht-additive Fertigungsverfahren sind etwa herkömmliche Urformverfahren wie Gießen, z.B. Schwerkraftgießen, Druckgießen, Niederdruckgießen, Schleudergießen, Stranggießen, Spritzgießen, usw., oder wie Pressen, z.B. Spritzpressen, Strangpressen usw. Als weitere Beispiele für nicht-additive Fertigungsverfahren seien etwa herkömmliche Umformverfahren genannt wie Biegen, Walzen, Freiformschmieden, Gesenkschmieden, Fließpressen, Strangpressen, Tiefziehen usw. Ferner kann zur nicht-additiven Fertigung der Grundstruktur beispielsweise auf herkömmliche Fügeverfahren, z.B. Schweißen, Löten, Kleben usw., oder beispielsweise auf herkömmliche Trennverfahren, z.B. Zerspanen, Scherschneiden, Brennschneiden, Funkenerodieren usw., zurückgegriffen werden.

Insbesondere kann die Wandstärke der Grundstruktur als eine möglichst geringe, insbesondere minimale Wandstärke vorgegeben werden, welche zweckmäßigerweise für eine geringe auf das Bauteil wirkende Belastung ausgelegt ist bzw. welche die Grundstruktur mindestens benötigt, um den wirkenden Belastungen standhalten zu können. Die Grundstruktur wird dann gezielt an Stellen mit höheren Belastungen durch die Stützstruktur verstärkt, so dass das Bauteil auch an diesen Stellen den dort wirkenden, höheren Belastungen standhalten kann. Die Stützstruktur kann somit gezielt an besonders beanspruchten Positionen des Bauteils aufgebracht werden und das Bauteil kann individuell an den vorliegenden Lastfall angepasst werden.

Die Grundstruktur und die Stützstruktur können dabei prinzipiell aus dem gleichen Werkstoff bzw. Material gefertigt werden oder zweckmäßigerweise auch aus unterschiedlichen Werkstoffen bzw. Materialien. Beispielsweise können im Falle unterschiedlicher Werkstoffe an den bestimmten Bereichen gezielt spezifische Werkstoffeigenschaften ausgenutzt werden.

Das additive Fertigungsverfahren ermöglicht es, die Stützstruktur punktgenau aufzubringen und somit präzise lokale Verstärkungen der Grundstruktur zu erzeugen. Additive Fertigung ist ein Herstellungsverfahren, bei dem ein dreidimensionales Objekt bzw. eine dreidimensionale Struktur durch konsekutives Hinzufügen eines Werkstoffs Schicht für Schicht erzeugt wird. Dabei wird nacheinander eine neue Werkstoffschicht aufgetragen, verfestigt und fest mit den darunter liegenden Schichten verbunden, z.B. mit Hilfe eines Lasers, Elektronenstrahls oder Lichtbogens.

Die Bereiche bzw. Stellen, an welchen die Grundstruktur durch die Stützstruktur verstärkt werden soll, werden im Rahmen des vorliegenden Verfahrens mittels des Optimierungsverfahrens bzw. eines entsprechenden Optimierungsalgorithmus bestimmt bzw. identifiziert bzw. lokalisiert. Als Optimierungsverfahren bzw. Optimierung sind im Allgemeinen analytische oder numerische Berechnungsverfahren zu verstehen, um optimierte, insbesondere minimierte oder maximierte Parameter eines komplexen Systems zu finden.

Zu diesem Zweck kann insbesondere ein Optimierungsproblem formuliert werden, wobei ein Lösungsraum Ω, also eine Menge von möglichen Lösungen bzw. Variablen *̅x̅*̅, sowie eine Zielfunktion *f* vorgegeben werden. Zur Lösung dieses Optimierungsproblem wird ein Satz von Werten der Variablen bzw. Lösungen *̅x̅*̅ ∈ Ω gesucht, so dass *f*(*̅x̅*̅) ein vorgegebenes Kriterium erfüllt, beispielsweise maximal oder minimal wird. Ferner können auch Rand- bzw. Nebenbedingungen vorgegeben werden, wobei zulässige Lösungen *̅x̅*̅ diese vorgegebenen Randbedingungen erfüllen müssen. Im vorliegenden Fall kann zur Lösung des Optimierungsproblems beispielsweise eine Zielfunktion derart definiert werden, dass die Gesamtwandstärke des Bauteils möglichst minimiert wird.

Besonders zweckmäßig wird das Optimierungsverfahren in Abhängigkeit von einer numerischen Lösung, insbesondere von einer Finite-Elemente-Analyse (FE-Analyse) durchgeführt. Das Bauteil wird dabei in endlich viele Teilgebiete, in sog. finite Elemente aufgeteilt. Jedem, einem Optimierungsraum zugehörigen finiten Element wird eine sog. Pseudodichte zugewiesen. Die Steifigkeit der Struktur wird primär von dieser Pseudodichte beeinflusst, wobei Elemente, deren Pseudodichte unter einem vorgegebenen Grenzwert liegen, iterativ entfernt werden.

Somit kann das Bauteil im Rahmen des Optimierungsverfahrens in eine Vielzahl einzelner Bereiche eingeteilt werden und für diese Bereiche kann individuell bestimmt werden, ob in diesen Bereichen jeweils Material mittels additiver Fertigung aufgetragen werden soll. Beispielsweise kann in diesen einzelnen Bereichen jeweils eine minimierte Gesamtwandstärke durch Lösen des Optimierungsproblems bestimmt werden. Gemäß dem Ergebnis des Optimierungsverfahrens wird in den entsprechend bestimmten Bereichen jeweils individuell die entsprechende Stützstruktur aufgebracht. Die Gesamtwandstärke des Bauteils, also die Summe der vorgegebenen Wandstärke der Grundstruktur und der Stützstruktur, ist somit insbesondere nicht konstant und kann über das gesamte Bauteil variieren.

Auf herkömmliche Weise wird für ein Bauteil oftmals eine konstante Wandstärke vorgegeben, welche sich an der Wandstärke der Position mit der höchsten Belastung orientiert. Oftmals kann das Bauteil dabei an Stellen mit geringerer Belastung eine höhere Wandstärke besitzen, als eigentlich benötigt, was mit hohem Materialverbrauch und somit mit unnötigen Kosten verbunden ist.

Anstelle eines Bauteils mit konstanter Wandstärke kann im Rahmen des vorliegenden Verfahrens besonders zweckmäßig ein Bauteil mit einem individuellen, speziell angepassten Wandstärkenprofil bzw. Wandstärkenverlauf erzeugt werden, insbesondere mit einer individuellen Volumenverteilung oder einem individuellen Verlauf verschiedener Werkstoffe. Ein derartiges nicht konstantes Wandstärkenprofil oder eine ungleichmäßige Verteilung verschiedener Werkstoffe mittels herkömmlicher, nicht-additiver Fertigungsverfahren wie herkömmlichem Urformen oder herkömmlichem Umformen zu erzeugen, kann sich oftmals als sehr aufwendig erweisen.

Das vorliegende Verfahren stellt nun eine Möglichkeit bereit, um ein teilweise additiv gefertigtes Bauteil zu erzeugen, wobei die Grundstruktur nicht-additiv gefertigt wird und wobei die Stützstruktur additiv gefertigt wird. Die Grundstruktur kann kostengünstig und materialsparend mittels des jeweiligen nicht-additiven Fertigungsverfahrens gefertigt werden. Der Einsatz des additiven Fertigungsverfahrens kann reduziert werden, so dass auch hier Kosten und Material gespart werden können. Das Bauteil kann kostengünstig, materialsparend und gewichtsreduziert gefertigt werden und optimal an den späteren Anwendungsfall und dessen Einsatzgebiet angepasst werden.

Die vorliegende Erfindung schlägt somit ein verbessertes Herstellungsverfahren von Bauteilen für technische Vorrichtungen vor, welches mit einem geringen Material-, Zeit- und Kostenaufwand verbunden ist.

Im Gegensatz zu dem vorliegenden Verfahren kann gemäß der eingangs erläuterten DE 10 2018 213 416 A1 ein Bauelement nur vollständig mittels eines generativen bzw. additiven Fertigungsverfahren gefertigt werden. Zwar kann mittels der DE 10 2018 213 416 A1 eine Verstärkung eines Bauelements mittels Verstärkungsfasern vorgenommen werden, jedoch werden dabei nicht nur diese Verstärkungsfasern, sondern das gesamte Bauelement additiv gefertigt, was mit hohem Kosten- und Zeitaufwand verbunden ist. Im Rahmen der DE 10 2018 213 416 A1 ist es also nicht möglich, ein Bauteil nur teilweise additiv zu fertigen. Mittels der dortigen Topologieoptimierung können keine Bereiche auf einer nicht-additiv gefertigten Grundstruktur bestimmt werden, in welchen mittels additiver Fertigung zusätzlich Material als Stützstruktur auf die Grundstruktur aufgebracht wird. Gemäß der DE 10 2018 213 416 A1 werden sämtliche Bereiche bestimmt, in welchen mittels additiver Fertigung Material aufgebracht wird, um das Bauteil zu erzeugen. Im Gegensatz dazu ermöglicht die vorliegende Erfindung eine verbesserte, kostengünstigere und aufwandsärmere Herstellung von Bauteilen.

Vorteilhafterweise wird die vorgegebene Wandstärke der Grundstruktur abhängig von einer minimalen erforderlichen Wandstärke oder als diese minimal erforderliche Wandstärke vorgegeben, um einem maximalen Auslegungsdruck standhalten zu können. Als Auslegungsdruck oder Designdruck oder auch Berechnungsdruck sei insbesondere ein Druck zu verstehen, welcher im regulären Betrieb des Bauteils von innen oder außen auf die Wand des Bauteils wirkt. Die Wandstärke der Grundstruktur wird zweckmäßigerweise derart ausgelegt, um den im späteren Betrieb des Bauteils zu erwartenden Auslegungsdruck standhalten zu können. Besonders zweckmäßig wird die minimale erforderliche Wandstärke gemäß den Normen DIN EN 13445-3 Kapitel 7 oder ASME VIII-1 Subsec. A UG-27, UG-28 bestimmt, welche die Auslegung der Wandstärke abhängig von einem zulässigen Auslegungs- bzw. Berechnungsdruck definieren. Beispielsweise kann die minimal erforderliche Wandstärke gemäß der Kesselformel bestimmt werden, wie sie in den Normen DIN EN 13445-3 Kapitel 7 und ASME VIII-1 Subsec. A UG-27, UG-28 definiert ist.

Alternativ oder zusätzlich wird die vorgegebene Wandstärke der Grundstruktur besonders zweckmäßig abhängig von der minimal erforderlichen Wandstärke oder als die minimal erforderliche Wandstärke vorgegeben, um Belastungen an von Störstellen weit entfernten Bereichen standhalten zu können. Als Störstellen seien insbesondere globale Störstellen oder externe Störquellen zu verstehen, welche im Betrieb des Bauteils zusätzlich zu dem Auslegungs- bzw. Innendruck Belastungen auf das Bauteil ausüben können. Derartige globale Störstellen können von unterschiedlicher Natur sein und beispielsweise spezielle mechanische Störstellen in dem Bauteil selbst umfassen, wie Öffnungen, Biegungen, Verbindungen zu anderen Bauteilen usw., oder ferner auch externe Temperatur- oder Druckschwankungen sowie externe Wetter- oder Klimabedingungen wie etwa Erdbeben, Windstöße usw. Von globalen Störstellen weit entferne Bereiche sind insbesondere in der Norm DIN EN 13445-3 Anhang C definiert, insbesondere als Bereiche, in welchen Spannung, Druck und mechanische Lasten jeweils unterhalb vorgegebener Grenzwerte liegen.

Zweckmäßigerweise werden die minimal erforderliche Wandstärke und somit die Wandstärke der Grundstruktur somit derart vorgegeben, um dem zu erwartenden Auslegungsdruck im späteren regulären Betrieb ohne die zusätzliche Stützstruktur an von Störstellen weit entfernten Bereichen standhalten zu können. Die Stützstruktur wird mittels der additiven Fertigung zweckmäßigerweise derart auf die Grundstruktur an Bereichen des Bauteils aufgebracht, die durch Störquellen oder Störstellen Belastungen ausgesetzt sind. Dies können beispielsweise mechanische Spannungen aufgrund von Öffnungen, Biegungen, Verbindungen usw. sein.

Insbesondere entspricht die vorgegebene Wandstärke der Grundstruktur dieser minimalen bzw. minimal erforderlichen Wandstärke. Somit kann die Grundstruktur insbesondere mit geringstmöglichem Werkstoffverbrauch gefertigt werden. Ferner kann die Wandstärke zweckmäßigerweise auch etwas stärker sein als die minimal erforderliche Wandstärke und somit insbesondere zwischen der minimalen bzw. minimal erforderlichen Wandstärke und einer maximalen bzw. maximal erforderlichen Wandstärke liegen. Beispielsweise kann die vorgegebene Wandstärke die minimale bzw. minimal erforderliche Wandstärke um maximal 50% überschreiten, insbesondere um maximal 25%, ferner insbesondere um maximal 15%, ferner insbesondere um maximal 10%, ferner insbesondere um maximal 5%. Die Grundstruktur kann somit mit möglichst geringer oder gar geringstmöglicher Wandstärke auf herkömmliche Weise, nicht-additiv gefertigt werden. An bestimmten Stellen erhöhter Belastung kann gezielt die Stützstruktur mittels additiver Fertigung aufgebracht werden, damit das Bauteil im späteren Betrieb sämtlichen Belastungen sicher standhalten kann.

Vorteilhafterweise wird im Zuge des Optimierungsverfahrens für den wenigstens einen Bereich eine optimierte Wandstärke bestimmt. Zweckmäßigerweise wird dabei eine maximale Gesamtwandstärke für das Bauteil vorgegeben, welche beispielsweise ausreichend groß bemessen ist, damit das Bauteil der höchsten Belastung standhalten kann. Für die einzelnen Bereiche des Bauteils wird zweckmäßigerweise bewertet, ob die Gesamtwandstärke reduziert werden kann, und es wird jeweils als optimierte Wandstärke derjenige Wert bestimmt, mit welchem das Bauteil den an dem jeweiligen Bereich wirkenden Belastungen standhalten kann. An Bereichen mit hoher oder höchster Belastung wird die maximale Gesamtwandstärke insbesondere kaum bzw. nicht verringert. Bei Bedarf bzw. bei sehr hoher Belastung kann die maximale Gesamtwandstärke auch noch weiter erhöht werden. An Bereichen mit geringer Belastung kann die Gesamtwandstärke maximal reduziert bzw. minimiert werden. Alternativ kann auch von einer minimalen Gesamtwandstärke ausgegangen werden und im Zuge des Optimierungsverfahrens kann zweckmäßigerweise bestimmt werden, an welchen Stellen die Gesamtwandstärke basierend auf den dort wirkenden Belastungen erhöht werden soll. Diese minimale Gesamtwandstärke kann beispielsweise der vorgegebenen Wandstärke der Grundstruktur entsprechen.

Insbesondere stellt die optimierte Wandstärke für die einzelnen Bereiche jeweils die geringstmögliche Wandstärke dar, bei welcher dennoch vorgegebene Struktureigenschaften des Bauteils erreicht werden können.

Vorteilhafterweise wird in Abhängigkeit von der optimierten Wandstärke in dem wenigstens einen bestimmten Bereich die Stützstruktur mittels des additiven Fertigungsverfahrens auf die nicht-additiv gefertigte Grundstruktur aufgebacht. Insbesondere wird eine Wandstärke der Stützstruktur in den einzelnen Bereichen jeweils abhängig von einer Differenz zwischen der optimierten Wandstärke und der vorgegebenen Wandstärke bestimmt. Eine Dicke, Höhe bzw. Stärke einer durch das additive Fertigungsverfahren auf die nicht-additiv gefertigte Grundstruktur aufgebrachten Schicht wird zweckmäßigerweise durch diese Differenz vorgegeben.

Vorzugsweise wird im Zuge des Optimierungsverfahrens eine Anpassung einer lokal erforderlichen Wandstärke des Bauteils, insbesondere eine Minimierung der Wandstärke bzw. der Gesamtwandstärke des Bauteils, in Abhängigkeit von Lasten bzw. Belastungen durchgeführt, die im Betrieb auf das Bauteil wirken. Die auf das Bauteil wirkenden Belastungen können in dem Optimierungsproblem entsprechend formuliert werden. Besonders zweckmäßig kann die entsprechend minimierte Gesamtwandstärke als optimierte Wandstärke bestimmt werden. Zweckmäßigerweise wird in den jeweiligen Bereichen auf die Grundstruktur jeweils die entsprechende Stützstruktur aufgebracht, so dass die Summe der vorgegebenen Wandstärken der Grundstruktur und der Stützstruktur der für den jeweiligen Bereich bestimmten optimierten bzw. minimierten Gesamtwandstärke entspricht.

Bevorzugt wird eine Gesamtwandstärke in dem wenigstens einen Bereich, zusammengesetzt aus der vorgegebenen Wandstärke der Grundstruktur und einer Dicke der Stützstruktur, im Zuge des Optimierungsverfahrens derart bestimmt, um einer Last standhalten zu können, die in dem wenigstens einen Bereich im Betrieb auf das Bauteil wirkt. Somit kann die Dicke der Stützstruktur und ferner die Gesamtwandstärke besonders zweckmäßig abhängig von der vorgegebenen Wandstärke der Grundstruktur und ferner abhängig von den auf das Bauteil im späteren Betrieb wirkenden Lasten bestimmt werden. Zweckmäßigerweise kann somit eine bestmögliche Kombination aus nicht-additiver und additiver Fertigung ermöglicht werden.

Bevorzugt werden im Zuge des Optimierungsverfahrens als eine Randbedingung eine Steifigkeit des Bauteils und/oder eine maximal auftretende Spannung in dem Bauteil und/oder eine geometrische Randbedingung berücksichtigt. Bevorzugt wird im Rahmen des Optimierungsverfahrens die maximal auftretende Spannung limitiert. Zweckmäßigerweise können als Randbedingung beispielsweise auch die Steifigkeit, das Trägheitsmoment oder verschiedene geometrische Aspekte berücksichtigt werden. Beispielsweise wird als Randbedingung für das Optimierungsverfahren vorgegeben, dass eine vorgegebene Steifigkeit des Bauteils nicht unterschritten werden darf. Insbesondere wird im Zuge des Optimierungsverfahrens die Minimierung der Gesamtwandstärke bzw. das Bestimmen der optimierten Wandstärke durchgeführt, so dass die vorgegebene Randbedingung nicht verletzt wird und so dass das Bauteil mindestens die vorgegebene Steifigkeit aufweist oder eine maximale Spannung nicht überschreitet.

Gemäß einer bevorzugten Ausführungsform wird im Zuge des Optimierungsverfahrens eine Topologieoptimierung durchgeführt. Als Topologieoptimierung werden insbesondere computerbasierte Berechnungsverfahren verstanden zur Bestimmung einer möglichst günstigen Struktur bzw. Topologie eines Bauteils. Dabei kann beispielsweise ein geometrischer Körper als ein maximaler Bauraum vorgegeben werden, welchen das Bauteil maximal einnehmen soll. Der maximale Bauraum kann in einzelne Elemente bzw. Bereiche unterteilt werden und als Ergebnis der Topologieoptimerung wird zweckmäßigerweise bestimmt, welche einzelnen Elemente bzw. Bereiche des Bauraums mit Material belegt werden sollen. Beispielsweise kann festgestellt werden, welche Elemente zur Konformität mit den gesetzten Randbedingungen benötigt werden. Die anderen Elemente werden iterativ eliminiert. Beispielsweise kann im Zuge der sog. materiellen Topologieoptimierung die Geometrie des Bauteils in einem Entwurfsraum beschrieben werden. Jedem Element im Entwurfsraum kann eine Dichte bzw. Pseudodichte zugewiesen werden. Die einzelnen Dichten können beispielsweise jeweils Werte zwischen 0 und 100% annehmen und auf Basis eines Grenzwerts können die einzelnen Elemente jeweils erhalten oder eliminiert werden.

Es versteht sich, dass das Optimierungsverfahren nicht auf eine Topologieoptimierung mit Pseudodichten beschränkt sein soll, sondern dass zweckmäßigerweise auch weitere Optimierungsverfahren mit anderen Ansätzen verwendet werden können.

Alternativ oder zusätzlich wird im Zuge des Optimierungsverfahrens vorzugsweise eine Materialoptimierung des Bauteils durchgeführt. Zur Lösung des Optimierungsproblems kann in diesem Fall beispielsweise die Zielfunktion derart definiert werden, dass das für die Wand des Bauteils benötigte Material minimiert wird.

Alternativ oder zusätzlich werden im Zuge des Optimierungsverfahrens vorzugsweise eine Lastoptimierung und/oder eine Spannungsoptimierung durchgeführt. Das Bauteil kann dabei beispielsweise optimal an die auftretenden Lasten bzw. Spannungen angepasst werden. Alternativ oder zusätzlich wird im Zuge des Optimierungsverfahrens vorzugsweise eine Geometrieoptimierung durchgeführt. Beispielsweise kann somit eine Geometrie bzw. Form des Bauteils abhängig von vorgegebenen Randbedingungen angepasst werden.

Alternativ oder zusätzlich kann vorzugsweise im Zuge des Optimierungsverfahrens eine Strömungsoptimierung durchgeführt werden. Insbesondere kann das Bauteil gezielt an die strömungstechnischen Erfordernisse angepasst werden, um beispielsweise eine gleichmäßige Durchströmung ohne unterschiedliche oder nennenswert unterschiedliche Strömungsgeschwindigkeiten zu ermöglichen oder um beispielsweise zu verhindern, dass sich Bereiche langsamer bzw. keiner Durchströmung, also sogenannte Toträume, ergeben, die zu einer Entmischung von Fluiden führen könnte.

Vorteilhafterweise wird das Optimierungsverfahren in Abhängigkeit von einer Simulation des Bauteils durchgeführt, insbesondere von einer numerischen Simulation, weiter insbesondere von einer Simulation der technischen Vorrichtung umfassend das Bauteil. Insbesondere kann eine statische oder dynamische Simulation durchgeführt werden, beispielsweise eine thermo-mechanische Festigkeitssimulationen. Mit Hilfe der Simulation kann das Bauteil bzw. die gesamte technische Vorrichtung mitsamt dem Bauteil theoretisch nachgebildet werden. Das Verhalten des Bauteils während des regulären Betriebes sowie die auf das Bauteil wirkenden Spannungen, Lasten usw. können simuliert werden. Insbesondere kann die Gesamtwandstärke des Bauteils im Zuge der Simulation verändert werden, um das Verhalten des Bauteils mit unterschiedlichen Wandstärken zu untersuchen.

Gemäß einer besonders vorteilhaften Ausführungsform wird die Simulation des Bauteils, insbesondere der technischen Vorrichtung, mit Hilfe einer Finite-Elemente-Methode (FEM) durchgeführt. Die Finite-Elemente-Methode ist ein numerisches Verfahren, welches auf dem numerischen Lösen eines komplexen Systems aus partiellen Differentialgleichungen basiert. Das Bauteil bzw. die Vorrichtung wird dabei in endlich viele Teilgebiete einfacher Form aufgeteilt, sprich in finite Elemente, deren physikalisches bzw. thermo-hydraulisches Verhalten aufgrund ihrer einfachen Geometrie berechnet werden kann. In jedem der finiten Elemente werden die partiellen Differentialgleichungen durch einfache Differentialgleichungen oder durch algebraische Gleichungen ersetzt. Das somit erhaltene System aus Gleichungen wird gelöst, um eine Näherungslösung der partiellen Differentialgleichungen zu erhalten. Das physikalische Verhalten des Gesamtkörpers wird beim Übergang von einem Element in das benachbarte Element durch vorbestimmte Stetigkeitsbedingungen nachgebildet. Eine derartige Finite-Elemente-Simulation bietet sich besonders vorteilhaft zur Durchführung eines Optimierungsverfahrens an. Beispielsweise kann im Rahmen des vorliegenden Verfahrens für einzelne finite Elemente jeweils untersucht werden, ob diese jeweils als Teil der Grund- bzw. Stützstruktur mit einem entsprechenden Werkstoff befüllt werden sollen.

Gemäß einer besonders bevorzugten Ausführungsform wird die Stützstruktur bzw. das Zusatzvolumen mittels eines sog. Lichtbogendrahtauftragschweißens (engl.: "Wire and Arc Additive Manufacturing", WAAM) auf die Grundstruktur aufgebracht. Im Zuge dieses WAAM werden einzelne Schichten mit Hilfe eines abschmelzenden Drahtes und eines Lichtbogens erzeugt. Zu diesem Zweck können Schweißbrenner, beispielsweise zum Metallschutzgasschweißen, verwendet werden, wobei zwischen dem Schweißbrenner und dem herzustellenden Bauteil ein Lichtbogen brennt. Ein entsprechender Werkstoff wird z.B. in Form eines Drahtes oder Bandes kontinuierlich nachgeführt und durch den Lichtbogen aufgeschmolzen. Dabei bilden sich schmelzflüssige Tropfen, welche auf das herzustellende Werkstück übergehen und fest mit diesem verbunden werden. Der jeweilige Werkstoff kann dabei beispielsweise als eine abschmelzende Drahtelektrode des Schweißbrenners zugeführt werden, wobei der Lichtbogen zwischen dieser Drahtelektrode und dem Bauteil brennt. Ebenso ist es denkbar, den jeweiligen Werkstoff in Form eines zusätzlichen Drahtes zuzuführen, welcher von dem Lichtbogen des Schweißbrenners aufgeschmolzen wird.

Alternativ oder zusätzlich können weitere additive Fertigungsverfahren verwendet werden, im Zuge derer der jeweilige Werkstoff der Stützstruktur bzw. des Zusatzvolumens beispielsweise in Pulverform oder in Form von Drähten oder Bändern aufgebracht und mit einem Laser- und/oder Elektronenstrahl beaufschlagt wird. Der jeweilige Werkstoff kann auf diese Weise beispielsweise einem Sinter- oder Schmelzprozess unterzogen werden, um verfestigt zu werden. Nach Erzeugen einer Schicht kann die nächste Schicht auf analoge Weise erzeugt werden. Derartige additive Fertigungsverfahren sind beispielsweise selektives Lasersintern (engl.: "selective laser sintering", SLS), selektives Laserschmelzen (engl.: "selective laser melting", SLM), Elektronenstrahlschmelzen (engl.: "electron beam melting", EBM), Stereolithographie (SL) oder Schmelzschichtung (engl.: "fused deposition modeling", FDM, oder "fused filament fabrication", FFF).

Alternativ oder zusätzlich können auch additive Fertigungsverfahren verwendet werden, für welche kein Laserstrahl, Elektronenstrahl oder Lichtbogen verwendet wird. Vorzugsweise kann die Stützstruktur mittels Kaltspritzen bzw. Kaltgasspritzen (engl.: "cold spray", CS) auf die Grundstruktur aufgebracht werden. Im Zuge dessen wird der jeweilige Werkstoff z.B. in Pulverform mit hoher Geschwindigkeit aufgebracht. Zu diesem Zweck kann beispielsweise ein auf wenige hundert Grad aufgeheiztes Prozessgas wie Stickstoff oder Helium z.B. durch Expansion auf Überschallgeschwindigkeit beschleunigt werden. Die Pulverpartikel des jeweiligen Werkstoffs können in den Gasstrahl injiziert werden, so dass diese auf hohe Geschwindigkeit beschleunigt werden und beim Aufprall auf die Grundstruktur eine fest haftende Schicht bilden.

Bevorzugt werden die Grundstruktur bzw. das Grundvolumen und die Stützstruktur bzw. das Zusatzvolumen aus demselben Werkstoff gefertigt, beispielsweise aus Aluminium bzw. einer Aluminiumlegierung. Ferner können die Grund- und Stützstruktur vorzugsweise auch aus unterschiedlichen Werkstoffen gefertigt werden. Die Werkstoffe für die Grund- und Stützstruktur können jeweils beispielsweise basierend auf ihren spezifischen Werkstoffeigenschaften und/oder basierend auf spezifischen Anforderungen an das Bauteil bzw. basierend auf den spezifischen auf das Bauteil wirkenden Belastungen gewählt werden.

Vorzugsweise werden die Grundstruktur bzw. das Grundvolumen und die Stützstruktur bzw. das Zusatzvolumen aus artähnlichen oder artunähnlichen Werkstoffen gefertigt, bevorzugt aus unterschiedlichen Aluminiumwerkstoffen bzw. unterschiedlichen Aluminiumlegierungen. Unter "artähnlichen" bzw. "artgleichen" Werkstoffen seien insbesondere solche Werkstoffe zu verstehen, die ein gleiches oder vergleichbares Gefüge und/oder eine gleiche oder vergleichbare Wärmedehnung aufweisen, was dagegen bei "artunähnlichen" bzw. "artungleichen" Materialen nicht der Fall ist. Artähnliche sind beispielsweise unterschiedliche Kohlenstoffstähle. Artunähnlich sind beispielsweise Kohlenstoffstahl und Edelstahl aufgrund der unterschiedlichen Werkstoffstruktur (Gefüge und Wärmedehnung). Unter artähnlichen Werkstoffen können auch verschiedene Aluminiumlegierungen verstanden werden, die aufgrund der Vielfalt der möglichen Legierungen zu großen Unterschieden in mechanischen und thermischen Kennwerten führen. Artunähnlich kann z.B. die Verbindung eines Aluminiumwerkstoffes mit einem (Edel-) Stahlwerkstoff sein, die sich in vielerlei Hinsicht "nicht vertragen". Zweckmäßigerweise können somit gezielt artgleiche oder artungleiche Werkstoffe mit anderen Eigenschaften zum Aufbau der Grundstruktur und der Stützstruktur verwendet werden.

Besonders bevorzugt ist der Werkstoff der Grundstruktur gegenüber einem bestimmten Material resistenter bzw. weniger verschleißempfindlich als der Werkstoff der Stützstruktur, insbesondere gegenüber Quecksilber. Alternativ oder zusätzlich besitzt der Werkstoff der Stützstruktur vorzugsweise eine höhere Festigkeit als der Werkstoff der Grundstruktur. Wenn beispielsweise im regulären Betrieb des Bauteils nur die Grundstruktur mit diesem Material in Kontakt kommt, weißt das Bauteil somit eine hohe Resistenz auf. Für die Stützstruktur, welche mit diesem Material dann zweckmäßigerweise nicht in Kontakt kommt, kann hingegen ein höherfester Werkstoff gewählt werden, um eine hohe Festigkeit des Bauteils zu erreichen. Besonders zweckmäßig wird die Grundstruktur beispielsweise aus einer Aluminiumlegierung mit geringem Magnesiumgehalt vorgeformt, was zu einer hohen Quecksilberunempfindlichkeit des Bauteils führt, und die Stützstruktur wird aus einer höherfesten und besser schweißbaren Aluminiumlegierung gefertigt, so dass ein unempfindliches Bauteil mit angepasster Festigkeit bzw. Steifigkeit erzeugt werden kann. Wenn das Bauteil beispielsweise zum Lagern oder Transport von Hg-haltigen Medien vorgesehen ist, kann somit die Gefahr von Hg-induzierter Spannungsrisskorrosion verringert werden. Der Werkstoff der Grundstruktur kann zu diesem Zweck beispielsweise eine Aluminiumlegierung, z.B. eine AlMg- oder AlMgMn-Legierung, mit einem Mg-Gehalt von weniger als 2% sein. Der Werkstoff der Stützstruktur kann beispielsweise eine Aluminiumlegierung mit einem Mg-Gehalt von mehr als 2% sein.

Die vorliegende Erfindung eignet sich für eine Vielzahl verschiedener Anwendungsbereiche und zur Herstellung von Bauteilen für verschiedene technische Vorrichtungen der Verfahrens-, Regelungs- und/oder Steuerungstechnik. Als technische Vorrichtung sei in dem vorliegenden Zusammenhang insbesondere eine Einheit oder ein System verschiedener Einheiten zu verstehen zum Ausführen eines technischen Prozesses, insbesondere eines verfahrens-, regelungs- und/oder steuerungstechnischen Prozesses. Die technische Vorrichtung kann vorteilhafterweise als eine Maschine ausgebildet sein, also insbesondere als eine Vorrichtung zur Energie- bzw. Kraftumsetzung, und/oder als ein Apparat, also insbesondere eine Vorrichtung zur Stoff- bzw. Materieumsetzung. Ferner kann die technische Vorrichtung auch insbesondere als eine Anlage ausgebildet sein, also insbesondere als ein System aus einer Vielzahl von Komponenten, die jeweils beispielsweise Maschinen und/oder Apparate sein können.

Beispielsweise ist das Bauteil ein Bauteil, insbesondere ein fluiddurchströmtes bzw. fluiddurchströmbares Bauteil, für eine verfahrenstechnische Vorrichtung.

Des Weiteren kann das das Bauteil ein Bauteil für einen Druckbehälter oder selbst ein Druckbehälter sein. Ein derartiger Druckbehälter kann insbesondere zum Lagern eines Stoffes unter positivem oder negativem Innen- oder Außendruck vorgesehen sein. Druckbehälter können dabei hohen Druckwechselbelastungen ausgesetzt sein. Ein derartiger Druckbehälter kann beispielsweise eine Druckbehälterwand, insbesondere eine innere und äußere Druckbehälterwand, einen Druckbehälterdeckel, einen Druckbehälterboden und/oder Rohrleitungen umfassen. Einzelne oder mehrerer derartiger Elemente können besonders zweckmäßig gemäß dem vorliegenden Verfahren hergestellt werden.

Das Bauteil kann beispielsweise ein fluiddurchströmtes Bauteil für einen Wärmetauscher sein, beispielsweise für einen Geradrohrwärmetauscher, einen Plattenwärmetauscher oder einen Lamellen-Plattenwärmetauscher bzw. Rippen-Plattenwärmetauscher (engl.: "Plate Fin Heat Exchanger", PFHE), ferner beispielsweise für einen gelöteten Rippen-Plattenwärmetauscher aus Aluminium ("Brazed Aluminium Plate-Fin Heat Exchangers", PFHE; Bezeichnungen gemäß der deutschen und englischen Ausgabe der ISO 15547-2:3005). Derartige Plattenwärmetauscher weisen eine Vielzahl von stapelförmig angeordneten Trennplatten und Lamellen auf, sowie Deckplatten, Randleisten bzw. Sidebars, Verteiler bzw. Header. Ferner sind Rohrstücke bzw. Rohrleitungen zum Zu- und Abführen einzelner Medien vorgesehen. Derartige Elemente können im Betrieb des Wärmetauschers hohen Belastungen ausgesetzt sein, z.B. hohen Temperaturen bzw. Temperaturdifferenzen sowie hohen Drücken und mechanischen Spannungen, und eignen sich daher besonders gemäß dem vorliegenden Verfahren hergestellt zu werden.

Die Anwendung des erfindungsgemäßen Verfahrens sei jedoch nicht auf fluiddurchströmte Bauteile und verfahrenstechnische Vorrichtungen begrenzt, sondern eignet sich in vorteilhafter Weise für eine Vielzahl verschiedener Strukturbauteile und technischer Anwendungsbereiche, beispielsweise für den Leichtbau, Flugzeug- oder Fahrzeugbau usw.

Die vorliegende Erfindung betrifft neben dem Verfahren zum Herstellen eines Bauteils weiterhin ein Bauteil für eine technische Vorrichtung, das gemäß dem vorliegenden Verfahren hergestellt ist. Ausgestaltungen dieses Bauteils ergeben sich aus der obigen Beschreibung des erfindungsgemäßen Verfahrens in analoger Art und Weise.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt schematisch einen Wärmetauscher in vereinfachter isometrischer Darstellung, wobei einzelne Bauteile des Wärmetauschers gemäß einer bevorzugten Ausführungsform eines erfindungsgemäßen Verfahrens gefertigt sind.
- Figur 2: zeigt schematisch eine bevorzugte Ausführungsform eines erfindungsgemäßen Verfahrens als ein Blockdiagramm.
- Figur 3: zeigt schematisch einen Header eines Wärmetauschers nach dem Stand der Technik.
- Figur 4: zeigt schematisch einen Header eines Wärmetauschers, der gemäß einer bevorzugten Ausführungsform eines erfindungsgemäßen Verfahrens gefertigt sind.

### Detaillierte Beschreibung der Zeichnung

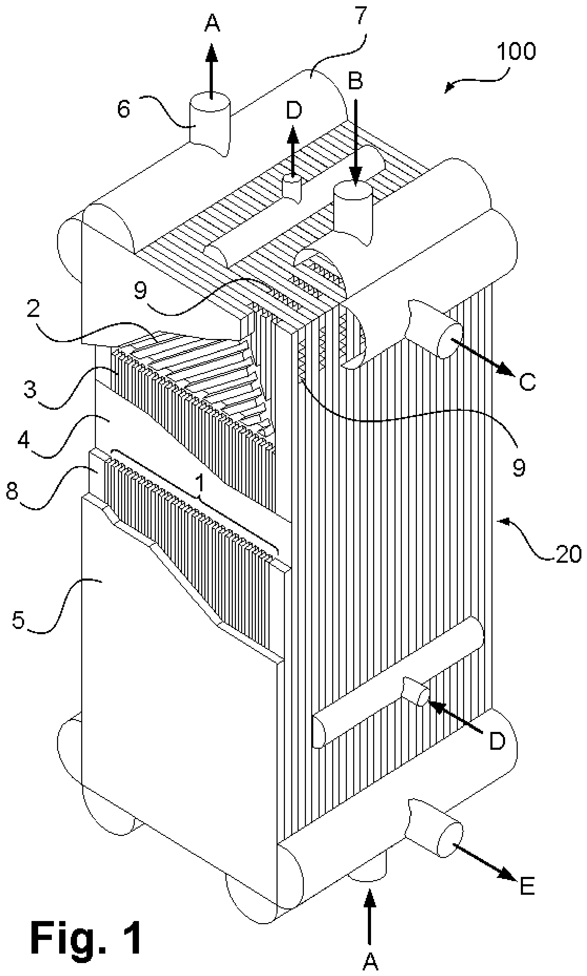

In Figur 1 ist ein Wärmetauscher schematisch dargestellt und mit 100 bezeichnet. Der Wärmetauscher stellt eine technische bzw. verfahrenstechnische Vorrichtung dar, wobei einzelne insbesondere fluiddurchströmte Elemente bzw. Bauteile des Wärmetauschers 100, insbesondere dessen Header 7, in besonders vorteilhafterweise gemäß einer bevorzugten Ausführungsform eines erfindungsgemäßen Verfahrens gefertigt sind.

Der in Figur 1 gezeigte Wärmetauscher 100 ist ein (hart-) gelöteter Rippen-Platten-Wärmetauscher aus Aluminium ("Brazed Aluminium Plate-Fin Heat Exchanger", PFHE; Bezeichnungen gemäß der deutschen und englischen Ausgabe der ISO 15547-2:3005), wie er in einer Vielzahl von Anlagen bei unterschiedlichsten Drücken und Temperaturen eingesetzt werden kann. Entsprechende Wärmetauscher finden beispielsweise Anwendung bei der Tieftemperaturzerlegung von Luft, bei der Verflüssigung von Erdgas oder in Anlagen zur Herstellung von Ethylen. Es versteht sich, dass "Aluminium" dabei auch eine Aluminiumlegierung bezeichnen kann.

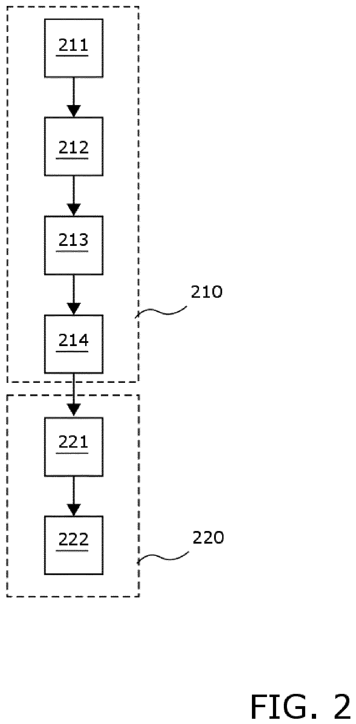

Gelötete Rippen-Platten-Wärmetauscher aus Aluminium sind in Figur 2 der erwähnten ISO 15547-2:3005 sowie auf Seite 5 der Veröffentlichung "The Standards of the Brazed Aluminium Plate-Fin Heat Exchanger Manufacturers' Association" der ALPEMA, 3. Auflage 2010, gezeigt und beschrieben. Die vorliegende Figur 1 entspricht im Wesentlichen den Abbildungen der besagten ISO Norm und soll im Folgenden erläutert werden.

Der in Figur 1 teilweise eröffnet dargestellte Plattenwärmetauscher 100 dient dem Wärmeaustausch von im dargestellten Beispiel fünf verschiedenen Prozessmedien A bis E. Zum Wärmeaustausch zwischen den Prozessmedien A bis E umfasst der Plattenwärmetauscher 100 dabei eine Vielzahl von parallel zueinander angeordneten Trennblechen 4 (in den zuvor genannten Veröffentlichungen, auf die sich auch die nachfolgenden Angaben in Klammern beziehen, im Englischen als Parting Sheets bezeichnet), zwischen denen durch Strukturbleche mit Lamellen 3 (Fins) definierte Wärmeaustauschpassagen 1 für jeweils eines der Prozessmedien A bis E, die dadurch in Wärmeaustausch miteinander treten können, ausgebildet sind.

Die Strukturbleche mit den Lamellen 3 sind typischerweise gefaltet bzw. gewellt ausgebildet, wobei durch die Faltungen bzw. Wellen jeweils Strömungskanäle gebildet werden, wie auch in Figur 1 der ISO 15547-2:3005 gezeigt. Die Bereitstellung der Strukturbleche mit Lamellen 3 bietet im Vergleich zu Plattenwärmetauschern ohne Lamellen den Vorteil einer verbesserten Wärmeübertragung, einer gezielteren Fluidführung und einer Erhöhung der mechanischen (Zug-)Festigkeit. In den Wärmeaustauschpassagen 1 strömen die Prozessmedien A bis E insbesondere durch die Trennbleche 4 getrennt voneinander, können ggf. aber im Fall von perforierten Strukturblechen mit Lamellen 3 durch letztere hindurchtreten.

Die einzelnen Passagen 1 bzw. die Strukturbleche mit den Lamellen 3 sind seitlich jeweils durch sogenannte Sidebars 8 umgeben, die jedoch Einspeise- und Entnahmeöffnungen 9 freilassen. Die Sidebars 8 halten die Trennbleche 4 auf Abstand und sorgen für eine mechanische Verstärkung des Druckraumes. Zum Abschluss an zumindest zwei Seiten dienen insbesondere verstärkt ausgebildete Deckbleche 5 (Cap Sheets), die parallel zu den Trennblechen 4 angeordnet sind.

Mittels sogenannter Header 7, die mit Stutzen 6 (Nozzles) versehen sind, werden die Prozessmedien A bis E über Einspeise- und Entnahmeöffnungen 9 zu- und abgeführt. Im Eingangsbereich der Passagen 1 befinden sich weitere Strukturbleche mit sogenannten Verteilerlamellen 2 (Distributor Fins), die für eine gleichmäßige Verteilung auf die gesamte Breite der Passagen 1 sorgen. In Strömungsrichtung gesehen am Ende der Passage 1 können sich weitere Strukturbleche mit Verteilerlamellen 2 befinden, die die Prozessmedien A bis E aus den Passagen 1 in die Header 7 führen, wo sie gesammelt und über die entsprechenden Stutzen 6 abgezogen werden.

Durch die Strukturbleche mit den Lamellen 3, die weiteren Strukturbleche mit den Verteilerlamellen 2, die Sidebars 8, die Trennbleche 4 und die Deckbleche 5 wird insgesamt ein hier quaderförmiger Wärmetauscherblock 20 gebildet, wobei unter einem "Wärmetauscherblock" hier die genannten Elemente ohne die Header 7 und Stutzen 6 in einem miteinander verbundenem Zustand verstanden werden sollen. Wie in Figur 1 nicht veranschaulicht, kann der Plattenwärmetauscher 100 insbesondere aus Fertigungsgründen aus mehreren entsprechenden quaderförmigen und miteinander verbundenen Wärmetauscherblöcken 20 ausgebildet sein.

Entsprechende Plattenwärmetauscher 100 werden aus Aluminium hartgelötet. Die einzelnen Passagen 1, umfassend die Strukturbleche mit den Lamellen 3, die weiteren Strukturbleche mit den Verteilerlamellen 2, die Deckbleche 5 und die Sidebars 8 werden dabei, jeweils mit Lot versehen, aufeinander gestapelt bzw. entsprechend angeordnet und in einem Ofen erwärmt. Auf den in dieser Weise hergestellten Wärmetauscherblock 20 werden die Header 7 und die Stutzen 6 aufgeschweißt.

Auf herkömmliche Weise werden die Header 7 beispielsweise unter Verwendung von halbzylindrischen Strangpressprofilen hergestellt, die auf die erforderliche Länge gebracht und dann auf den Wärmetauscherblock 20 aufgeschweißt werden. Dabei werden die Header 7 oftmals mit einer konstanten Wandstärke gefertigt, wobei sich diese Wandstärke an der Position der höchsten Auslastung orientiert.

Im Gegensatz dazu ermöglicht es das vorliegende Verfahren, Header 7 kostengünstig und materialsparend herzustellen mit einer variierenden Wandstärke, welche gezielt auf den individuell vorliegenden Lastfall angepasst ist, wie nachfolgend anhand von Figur 2 erläutert werden soll.

Figur 2 zeigt schematisch eine bevorzugte Ausführungsform eines erfindungsgemäßen Verfahrens als ein Blockdiagramm.

Nachfolgend wird beispielhaft erläutert, wie ein Bauteil in Form eines Headers für eine technische Vorrichtung in Form eines Wärmetauschers im Zuge des vorliegenden Verfahrens teilweise additiv hergestellt wird. Jedoch versteht sich, dass die vorliegende Erfindung nicht auf Header und Wärmetauscher begrenzt sein soll, sondern sich in vorteilhafter Weise für eine Vielzahl verschiedener Strukturbauteile und technischer Anwendungsbereiche eignet, beispielsweise für den Leichtbau, Flugzeug- oder Fahrzeugbau usw.

Im Zuge des Herstellungsprozesses wird zunächst eine Planungs- bzw. Simulationsphase 210 durchgeführt, bevor das Bauteil bzw. der Header im Zuge einer Fertigungsphase 220 tatsächlich gefertigt wird.

In Schritt 211 wird eine Simulation des herzustellenden Headers oder ferner des gesamten Wärmtauschers umfassend den Header mit Hilfe einer Finite-Elemente-Methode (FEM) erstellt. Der Header wird dabei in endlich viele Teilgebiete bzw. finite Elemente einfacher Form aufgeteilt, deren physikalisches bzw. thermo-hydraulisches Verhalten aufgrund ihrer einfachen Geometrie berechnet werden kann. Das physikalische Verhalten des gesamten Headers wird beim Übergang von einem Element in das benachbarte Element durch vorbestimmte Stetigkeitsbedingungen nachgebildet.

Insbesondere werden im Zuge der FEM Simulation im Betrieb des Wärmetauschers auf den Header wirkende mechanische bzw. thermo-hydraulische Belastungen berücksichtigt, insbesondere Drücke, Spannungen usw. Zweckmäßigerweise stellen die einzelnen finiten Elemente der FEM Simulation jeweils Bereiche der Wand bzw. Wandung des Headers dar.

In Schritt 212 werden eine minimal erforderliche und eine maximal erforderliche Gesamtwandstärke vorgegeben, welche die Wand des Headers mindestens bzw. höchstens aufweisen soll. Beispielsweise kann die Gesamtwandstärke auch mittels eines geometrischen Körpers als ein maximaler Bauraum vorgegeben werden, welchen der Header maximal einnehmen soll.

Die minimale erforderliche Wandstärke wird beispielsweis derart vorgegeben, um einem maximalen Auslegungsdruck standhalten zu können, insbesondere einem Auslegungs-, Design- oder Berechnungsdruck, welcher im späteren regulären Betrieb von innen oder außen auf die Wand des Headers wirkt.

Alternativ oder zusätzlich kann die minimal erforderliche Wandstärke derart vorgegeben werden, um Belastungen an von Störstellen weit entfernten Bereichen standhalten zu können, insbesondere globalen Störstellen oder externen Störquellen, welche im Betrieb des Headers zusätzlich zu dem Auslegungs- bzw. Innendruck Belastungen auf den Header ausüben können.

Beispielsweise kann die minimale erforderliche Wandstärke gemäß den Normen DIN EN 13445-3 Kapitel 7 oder ASME VIII-1 Subsec. A UG-27, UG-28 vorgegeben werden, welche die Auslegung der Wandstärke von Bauteilen abhängig von einem zulässigen Auslegungs- bzw. Berechnungsdruck definieren.

In Schritt 213 wird basierend auf der FEM Simulation ein Optimierungsverfahren durchgeführt, beispielsweise eine Topologieoptimerung. Beispielsweise wird im Zuge des Optimierungsverfahrens eine Minimierung der Gesamtwandstärke des Headers durchgeführt, wobei als eine Randbedingung eine vorgegebene Steifigkeit des Bauteils nicht unterschritten werden soll.

In Schritt 214 wird als ein Ergebnis des Optimierungsverfahrens bestimmt, welche der einzelnen finiten Elemente mit Werkstoff ausgefüllt werden sollen, so dass das Bauteil eine minimierte bzw. optimierte Gesamtwandstärke aufweist. Beispielsweise soll dabei eine erste Anzahl der finiten Elemente ausgefüllt werden, so dass der Header die vorgegebene minimale Gesamtwandstärke erreicht. Insbesondere betreffen diese Elemente bzw. Bereiche eine Grundstruktur des Headers. Ferner soll beispielsweise eine zusätzlich zweite Anzahl an finiten Elementen bzw. Bereichen ausgefüllt werden, damit der Header an diesen Stellen auftretenden, höheren Belastungen standhalten kann. Diese Bereiche betreffen insbesondere eine Stützstruktur, durch welche die Grundstruktur gezielt verstärkt wird.

Basierend auf diesen Ergebnissen wird der Header im Zuge der Fertigungsphase 220 gefertigt. Dabei wird in Schritt 221 zunächst eine entsprechende Grundstruktur bzw. ein Grundvolumen erzeugt, indem eine Wand bzw. Wandung des Headers mit einer vorgegebenen Wandstärke mittels eines nicht-additiven Fertigungsverfahrens gefertigt wird. Beispielsweise kann die vorgegebene Wandstärke der obig erläuterten, in Schritt 212 vorgegebenen minimalen Gesamtwandstärke entsprechen. Beispielsweise kann die Grundstruktur durch Gießen oder Biegen erzeugt werden.

In bestimmten Bereichen wird die Grundstruktur durch eine entsprechende Stützstruktur bzw. ein Zusatzvolumen verstärkt. Diese Bereiche werden insbesondere durch obig erläuterte zweite Anzahl finiter Elemente bestimmt. Zu diesem Zweck wird in Schritt 222 an diesen bestimmten Bereichen eine Menge eines Zusatzmaterials mittels eines additiven Fertigungsverfahrens auf die nicht-additiv gefertigte Wand bzw. die Grundstruktur aufgebracht.

Besonders bevorzugt wird zur Erzeugung der Stützstruktur ein jeweiliger Werkstoff mittels eines Lichtbogendrahtauftragschweißens ("Wire and Arc Additive Manufacturing", WAAM) aufgebracht. Einzelne Schichten werden dabei mit Hilfe eines abschmelzenden Drahtes und eines Lichtbogens erzeugt, wobei der jeweilige Werkstoff z.B. in Form eines Drahtes oder Bandes kontinuierlich nachgeführt und durch den Lichtbogen aufgeschmolzen wird. Durch ein derartiges WAAM Verfahren kann das Zusatz-, Verstärkungs- bzw. Versteifungsvolumen und somit die Stützstruktur präzise auf die Grundstruktur aufgebacht werden.

Das vorliegende Verfahren ermöglicht es somit, mittels des WAAM Verfahrens gezielt Material an besonders beanspruchten Positionen an dem Header aufzutragen. So kann eine einfache Grundstruktur entsprechend der minimal erforderlichen Wandstärke vorgefertigt und gezielt versteift bzw. verstärkt werden und dadurch an den individuell vorliegenden Lastfall angepasst werden.

Ferner ermöglicht das vorliegende Verfahren einen gezielten Einsatz von artgleichen Werkstoffen mit anderen Eigenschaften zum Aufbau der Grundstruktur und der Stützstruktur. So kann die Grundstruktur beispielsweise aus einer Aluminiumlegierung mit geringem Magnesiumgehalt vorgeformt werden. Dies führt zu einer Quecksilberunempfindlichkeit des Headers. Die Stützstruktur wird beispielsweise aus höherfesten und besser schweißbaren Aluminiumlegierungen gefertigt. Somit kann ein unempfindlicher Header mit angepasster Festigkeit bzw. Steifigkeit erzeugt werden.

Beispielsweise kann der erste Werkstoff eine Aluminiumlegierung, z.B. eine AlMg- oder AlMgMn-Legierung, mit einem Mg-Gehalt von weniger als 2% sein und der zweite Werkstoff beispielsweise eine Aluminiumlegierung mit einem Mg-Gehalt von mehr als 2%.

Ferner ist es zweckmäßigerweise auch denkbar, die Grundstruktur und die Stützstruktur aus artunähnlichen Werkstoffen oder beispielsweise auch aus demselben Werkstoff zu fertigen.

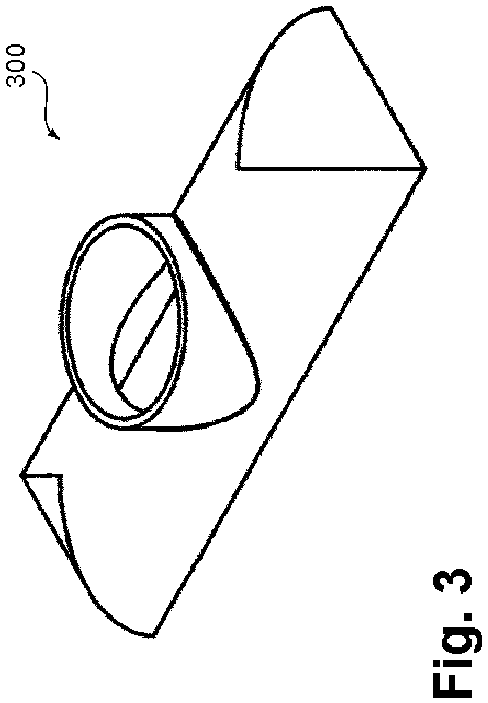

Figur 3 ist schematisch ein Header 300 eines Wärmetauschers schematisch dargestellt, der gemäß dem Stand der Technik hergestellt ist. Beispielsweise weist der Header 300 eine konstante Wandstärke und ist durchgehend aus demselben Werkstoff hergestellt.

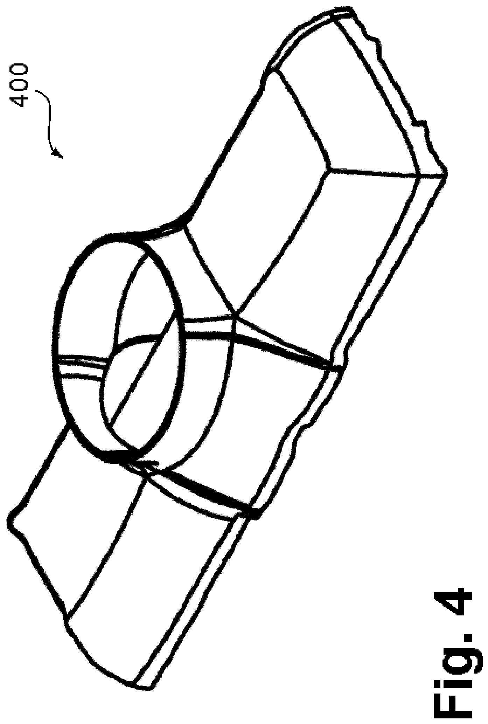

Im Vergleich dazu ist in Figur 4 ein Header 400 schematisch dargestellt, der gemäß einer bevorzugten Ausführungsform eines erfindungsgemäßen Verfahrens teilweise additiv gefertigt ist. Wie zu erkennen ist, weist der Header 400 keine konstante Wandstärke auf, sondern in unterschiedliche Bereichen bzw. finiten Elementen jeweils individuelle Wandstärken.

Der Header 400 gemäß dem vorliegenden Verfahren kann somit kostengünstiger und materialsparender hergestellt werden als der herkömmliche Header 300 nach dem Stand der Technik.

## Patentansprüche

1. Verfahren zum Herstellen eines teilweise additiv gefertigten Bauteils (7, 400) für eine technische Vorrichtung (100),
wobei eine Grundstruktur des Bauteils (7, 400) mit einer vorgegebenen Wandstärke mittels eines nicht-additiven Fertigungsverfahrens gefertigt wird (221),
wobei wenigstens ein Bereich des Bauteils (7, 400) mit Hilfe eines Optimierungsverfahrens bestimmt wird (213),
wobei in dem wenigstens einen Bereich eine Stützstruktur mittels eines additiven Fertigungsverfahrens auf die Grundstruktur aufgebacht wird (222).

2. Verfahren nach Anspruch 1, wobei die vorgegebene Wandstärke der Grundstruktur abhängig von einer minimalen erforderlichen Wandstärke oder als diese minimal erforderliche Wandstärke vorgegeben wird, um einem maximalen Auslegungsdruck standhalten zu können.

3. Verfahren nach Anspruch 1 oder 2, wobei im Zuge des Optimierungsverfahrens (213) für den wenigstens einen Bereich eine optimierte Wandstärke bestimmt wird und wobei die Stützstruktur in dem wenigstens einen Bereich in Abhängigkeit von der optimierten Wandstärke mittels des additiven Fertigungsverfahrens auf die Grundstruktur aufgebacht wird (222).

4. Verfahren nach einem der vorstehenden Ansprüche, wobei im Zuge des Optimierungsverfahrens (213) eine Anpassung einer lokal erforderlichen Wandstärke des Bauteils (7, 400) in Abhängigkeit von Lasten, die im Betrieb auf das Bauteil wirken, durchgeführt wird.

5. Verfahren nach einem der vorstehenden Ansprüche, wobei eine Gesamtwandstärke in dem wenigstens einen Bereich, zusammengesetzt aus der vorgegebenen Wandstärke der Grundstruktur und einer Dicke der Stützstruktur, im Zuge des Optimierungsverfahrens derart bestimmt wird, um einer Last standhalten zu können, die in dem wenigstens einen Bereich im Betrieb auf das Bauteil wirkt.

6. Verfahren nach einem der vorstehenden Ansprüche, wobei im Zuge des Optimierungsverfahrens (213) als eine Randbedingung eine Steifigkeit des Bauteils (7, 400) und/oder eine maximal auftretende Spannung in dem Bauteil (7, 400) und/oder eine geometrische Randbedingung berücksichtigt werden.

7. Verfahren nach einem der vorstehenden Ansprüche, wobei im Zuge des Optimierungsverfahrens (213) eine Topologieoptimierung und/oder eine Materialoptimierung und/oder eine Lastoptimierung und/oder eine Spannungsoptimierung und/oder eine Strömungsoptimierung und/oder eine Geometrieoptimierung des Bauteils (7, 400) durchgeführt wird.

8. Verfahren nach einem der vorstehenden Ansprüche, wobei das Optimierungsverfahren (213) in Abhängigkeit von einer Simulation (211) des Bauteils (7, 400), insbesondere der technischen Vorrichtung (100) umfassend das Bauteil (7, 400) durchgeführt wird, insbesondere mit Hilfe einer Finite-Elemente-Methode (211).

9. Verfahren nach einem der vorstehenden Ansprüche, wobei die Stützstruktur in dem wenigstens einen bestimmten Bereich mittels eines Lichtbogendrahtauftragschweißen (222) und/oder eines selektiven Lasersinterns und/oder eines selektiven Laserschmelzens und/oder eines Elektronenstrahlschmelzens und/oder einer Stereolithographie und/oder einer Schmelzschichtung und/oder mittels Kaltspritzen auf die Grundstruktur aufgebacht wird.

10. Verfahren nach einem der vorstehenden Ansprüche, wobei die Grundstruktur und die Stützstruktur aus demselben Werkstoff gefertigt werden oder aus artähnlichen Werkstoffen oder aus artunähnlichen Werkstoffen, insbesondere aus unterschiedlichen Aluminiumlegierungen.

11. Verfahren nach einem der vorstehenden Ansprüche, wobei der Werkstoff der Grundstruktur gegenüber einem bestimmten Material, insbesondere Quecksilber, resistenter ist als der Werkstoff der Stützstruktur und/oder wobei der Werkstoff der Stützstruktur eine höhere Festigkeit besitzt als der Werkstoff der Grundstruktur.

12. Verfahren nach einem der vorstehenden Ansprüche, wobei die Grundstruktur des Bauteils mittels eines nicht-additiven Urformverfahrens, insbesondere Gießen, Pressen, und/oder mittels eines nicht-additiven Umformverfahrens, insbesondere Biegen, Walzen, und/oder mit Hilfe eines nicht-additiven Fügeverfahrens, insbesondere Schweißen, Löten, Kleben, und/oder mit Hilfe eines nicht-additiven Trennverfahrens, insbesondere Zerspanen, Schneiden, gefertigt wird.

13. Verfahren nach einem der vorstehenden Ansprüche, wobei das Bauteil (7, 400) ein Bauteil für eine verfahrenstechnische Vorrichtung (100) ist, insbesondere ein Bauteil für einen Druckbehälter, insbesondere eine Druckbehälterwand, ein Druckbehälterdeckel, ein Druckbehälterboden oder eine Rohrleitung, oder ein fluiddurchströmtes Bauteil für einen Wärmetauscher (100), insbesondere eine Trennplatte, eine Lamelle, eine Deckplatte, eine Randleiste, ein Verteiler oder eine Rohrleitung.

14. Verfahren nach einem der vorstehenden Ansprüche, wobei das teilweise additiv gefertigte Bauteil (7, 400) als ein Bauteil (7, 400) für einen Druckbehälter, insbesondere als eine Druckbehälterwand, ein Druckbehälterdeckel, ein Druckbehälterboden oder eine Rohrleitung, oder als ein fluiddurchströmtes Bauteil für einen Wärmetauscher (100), insbesondere als eine Trennplatte, eine Lamelle, eine Deckplatte, eine Randleiste, ein Verteiler oder eine Rohrleitung, ausgebildet ist.

## Claims

1. Method for producing a component (7, 400) manufactured in part additively for a technical device (100),
wherein a basic structure of the component (7, 400) is manufactured (221) with a predefined wall thickness by means of a non-additive manufacturing method,
wherein at least one region of the component (7, 400) is determined (213) by means of an optimization method,
wherein, in the at least one region, a supporting structure is applied (222) to the basic structure by means of an additive manufacturing method.

2. Method according to claim 1, wherein the predefined wall thickness of the basic structure is predefined on the basis of a minimum required wall thickness or as this minimum required wall thickness in order to be able to withstand a maximum design pressure.

3. Method according to either claim 1 or claim 2, wherein, in the course of the optimization method (213), an optimized wall thickness is determined for the at least one region, and wherein the supporting structure is applied (222) to the basic structure in the at least one region on the basis of the optimized wall thickness by means of the additive manufacturing method.

4. Method according to any of the preceding claims, wherein, in the course of the optimization method (213), an adaptation of a locally required wall thickness of the component (7, 400) is carried out on the basis of loads acting on the component during operation.

5. Method according to any of the preceding claims, wherein a total wall thickness in the at least one region, composed of the predefined wall thickness of the basic structure and a thickness of the supporting structure, is determined in the course of the optimization method in order to be able to withstand a load acting on the component in the at least one region during operation.

6. Method according to any of the preceding claims, wherein, in the course of the optimization method (213), a stiffness of the component (7, 400) and/or a maximum occurring stress in the component (7, 400) and/or a geometric constraint are taken into account as a constraint.

7. Method according to any of the preceding claims, wherein, in the course of the optimization method (213), a topology optimization and/or a material optimization and/or a load optimization and/or a stress optimization and/or a flow optimization and/or a geometry optimization of the component (7, 400) is carried out.

8. Method according to any of the preceding claims, wherein the optimization method (213) is carried out on the basis of a simulation (211) of the component (7, 400), in particular the technical device (100) comprising the component (7, 400), in particular by means of a finite element method (211).

9. Method according to any of the preceding claims, wherein the supporting structure is applied to the basic structure in the at least one determined region by means of arc wire deposition welding (222) and/or selective laser sintering and/or selective laser melting and/or electron beam melting and/or stereolithography and/or fused deposition modeling and/or by means of cold spraying.

10. Method according to any of the preceding claims, wherein the basic structure and the supporting structure are manufactured from the same material or from materials of similar type or from materials of dissimilar type, in particular from different aluminum alloys.

11. Method according to any of the preceding claims, wherein the material of the basic structure is more resistant to a specific material, in particular mercury, than the material of the supporting structure, and/or wherein the material of the supporting structure has a higher strength than the material of the basic structure.

12. Method according to any of the preceding claims, wherein the basic structure of the component is manufactured by means of a non-additive primary forming method, in particular casting or pressing, and/or by means of a non-additive forming method, in particular bending or rolling, and/or by means of a non-additive joining method, in particular welding, soldering or gluing, and/or by means of a non-additive separation method, in particular machining or cutting.

13. Method according to any of the preceding claims, wherein the component (7, 400) is a component for a technical device (100), in particular a component for a pressure vessel, in particular a pressure vessel wall, a pressure vessel lid, a pressure vessel base or a pipeline, or a component through which fluid flows for a heat exchanger (100), in particular a partition plate, a lamella, a cover plate, an edge strip, a distributor or a pipeline.

14. Method (7, 400) according to any of the preceding claims, wherein the component manufactured in part additively is designed as a component (7, 400) for a pressure vessel, in particular as a pressure vessel wall, a pressure vessel lid, a pressure vessel base or a pipeline, or as a component through which fluid flows for a heat exchanger (100), in particular as a partition plate, a lamella, a cover plate, an edge strip, a distributor or a pipeline.

## Revendications

1. Procédé permettant la production d'un composant (7, 400) partiellement fabriqué de manière additive pour un dispositif (100) technique,
dans lequel une structure de base du composant (7, 400) est fabriquée avec une épaisseur de paroi prédéfinie au moyen d'un procédé de fabrication non additive (221),
dans lequel au moins une zone du composant (7, 400) est déterminée à l'aide d'un procédé d'optimisation (213),
dans lequel, dans l'au moins une zone, une structure de support est appliquée sur la structure de base au moyen d'un procédé de fabrication additive (222).

2. Procédé selon la revendication 1, dans lequel l'épaisseur de paroi prédéfinie de la structure de base est prédéfinie en fonction d'une épaisseur de paroi requise minimale ou en tant que ladite épaisseur de paroi requise minimale afin de pouvoir résister à une pression de conception maximale.

3. Procédé selon la revendication 1 ou 2, dans lequel, au cours du procédé d'optimisation (213), une épaisseur de paroi optimisée est définie pour l'au moins une zone, et dans lequel la structure de support est appliquée sur la structure de base dans l'au moins une zone en fonction de l'épaisseur de paroi optimisée au moyen du procédé de fabrication additive (222).

4. Procédé selon l'une des revendications précédentes, dans lequel, au cours du procédé d'optimisation (213), une adaptation d'une épaisseur de paroi requise localement du composant (7, 400) est mise en œuvre en fonction de charges qui agissent sur le composant en fonctionnement.

5. Procédé selon l'une des revendications précédentes, dans lequel une épaisseur de paroi totale dans l'au moins une zone, composée de l'épaisseur de paroi prédéfinie de la structure de base et d'une épaisseur de la structure de support, est déterminée au cours du procédé d'optimisation de manière à pouvoir résister à une charge qui agit sur le composant dans l'au moins une zone en fonctionnement.

6. Procédé selon l'une des revendications précédentes, dans lequel, au cours du procédé d'optimisation (213), une rigidité du composant (7, 400) et/ou une contrainte maximale apparaissant dans le composant (7, 400) et/ou une condition marginale géométrique sont prises en compte comme conditions marginales.

7. Procédé selon l'une des revendications précédentes, dans lequel, au cours du procédé d'optimisation (213), une optimisation de topologie et/ou une optimisation de matériau et/ou une optimisation de charge et/ou une optimisation de tension et/ou une optimisation d'écoulement et/ou une optimisation de géométrie du composant (7, 400) sont mises en œuvre.

8. Procédé selon l'une des revendications précédentes, dans lequel le procédé d'optimisation (213) est mis en œuvre en fonction d'une simulation (211) du composant (7, 400), en particulier du dispositif (100) technique comprenant le composant (7, 400), en particulier à l'aide d'une modélisation par éléments finis (211).

9. Procédé selon l'une des revendications précédentes, dans lequel la structure de support est appliquée sur la structure de base dans l'au moins une zone déterminée au moyen d'un soudage par rechargement de fil à arc électrique (222) et/ou d'un frittage au laser sélectif et/ou d'une fusion au laser sélective et/ou d'une fusion par faisceau d'électrons et/ou d'une stéréolithographie et/ou d'une stratification par fusion et/ou par projection à froid.

10. Procédé selon l'une des revendications précédentes, dans lequel la structure de base et la structure de support sont fabriquées dans le même matériau ou dans des matériaux de type similaire ou dans des matériaux de type non similaire, en particulier dans des alliages d'aluminium différents.

11. Procédé selon l'une des revendications précédentes, dans lequel le matériau de la structure de base est plus résistant à un matériau défini, en particulier au mercure, que le matériau de la structure de support, et/ou dans lequel le matériau de la structure de support possède une résistance supérieure à celle du matériau de la structure de base.

12. Procédé selon l'une des revendications précédentes, dans lequel la structure de base du composant est fabriquée au moyen d'un procédé de formage primaire non additif, en particulier d'une coulée, d'un pressage, et/ou au moyen d'un procédé de formage non additif, en particulier un pliage, un laminage, et/ou à l'aide d'un procédé d'assemblage non additif, en particulier un soudage, un brasage, un collage, et/ou à l'aide d'un procédé de séparation non additif, en particulier un enlèvement de copeaux, une découpe.

13. Procédé selon l'une des revendications précédentes, dans lequel le composant (7, 400) est un composant pour un dispositif (100) dans le domaine technique de procédé, en particulier un composant pour un réservoir sous pression, en particulier une paroi de réservoir sous pression, un couvercle de réservoir sous pression, un fond de réservoir sous pression ou une canalisation, ou un composant traversé par un fluide pour un échangeur de chaleur (100), en particulier une plaque de séparation, une lamelle, une plaque de recouvrement, un rebord, un distributeur ou une canalisation.

14. Procédé selon l'une des revendications précédentes, dans lequel le composant (7, 400) partiellement fabriqué de manière additive est réalisé comme un composant (7, 400) pour un réservoir sous pression, en particulier comme une paroi de réservoir sous pression, un couvercle de réservoir sous pression, un fond de réservoir sous pression ou une canalisation, ou comme un composant traversé par un fluide pour un échangeur de chaleur (100), en particulier comme une plaque de séparation, une lamelle, une plaque de recouvrement, un rebord, un distributeur ou une canalisation.
